# EUROPEAN PATENT APPLICATION

(11) **EP 3 734 347 A1**
(43) Date of publication of application: **04.11.2020**
(21) Application number: 18894261.9
(22) Date of filing: 27.12.2018
(51) Int. Cl.: G02B 26/00, G02B 3/00, G02B 3/14, G02B 5/02, G02B 26/08, G03B 15/00

(54) **OPTICAL ELEMENT, MICROLENS ARRAY, AND METHOD FOR PRODUCING OPTICAL ELEMENT**

(30) Priority: 28.12.2017 JP 2017254351; 26.12.2018 JP 2018243598
(71) Applicant: Nitto Denko Corporation, Ibaraki-shi, Osaka 567-8680 (JP); Shinshu University, Matsumoto-shi, Nagano 390-8621 (JP)
(72) Inventor: YAMADA, Yasumi, Ibaraki-shi, Osaka 567-8680 (JP); HIRAI, Toshihiro, Ueda-shi, Nagano 386-8567 (JP)
(74) Representative: Müller-Boré & Partner Patentanwälte PartG mbB
(86) International application number: PCT/JP2018/048287
(87) International publication number: WO 2019/131925

(57) **Abstract**

An optical device and a fabrication method thereof are provided. The optical characteristics of the optical device are adjustable with a simple structure. An optical device has a first electrode layer, a second electrode layer, and a polymer layer provided between the first electrode layer and the second electrode layer, wherein the polymer layer deforms by application of a voltage and forms a light scatterer on a surface of the optical device.

## Description

### TECHNICAL FIELD

The present invention relates to an optical device, microlens array, and a method of fabricating an optical device.

### BACKGROUND ART

Conventionally, a tunable lens system or a lens driving mechanism in an optical axis direction using a polymer material deformable by applying electric voltage is known. (See, for example, Patent Document 1 and Patent Document 2 presented below.) The polymer material is used as a lens holder to hold and move the lens along the optical axis, making use of expansion and contraction of the polymer material by applying the voltage.

A method of producing a convex or a concave lens by deforming electrodes and an organic material sandwiched between the electrodes is also known. (See, for example, Patent Document 3 presented below.) In this method, the dielectric elastomer material applied in the direction of the electric field , and a distribution is generated in the quantity of piezoelectric/electrostrictive distortion per unit electric-field, within a plane perpendicular to the direction of the electric field applied to the organic material.

For a flexible polymer actuator employed in an artificial muscle actuator, a gel material containing an ionic liquid of 1 to 30 parts by weight with respect to polyvinyl chloride of 1 to 50 parts by weight is known. (See, for example, Patent Document 4).

### PRIOR ART DOCUMENTS

Patent Document 1: Japan Patent No. 4530163
Patent Document 2: Japan Patent No. 5180117
Patent Document 3: Japan Patent No. 5029140
Patent Document 4: Japan Patent No. 5392660

### SUMMARY OF THE INVENTION

### [TECHNICAL PROBLEM TO BE SOLVED]

In the conventional configuration for moving the lens along the optical axis, the position of a single lens is shifted by expansion or contraction of the polymer material used as the lens holder. The holder first deforms, and then the lens position changes due to the deformation of the holder. It is difficult for this configuration to satisfactorily improve the response and accuracy of lens driving.

For the distribution in the quantity of piezoelectric/electrostrictive distortion within a plane of the organic material layer, materials with different characteristics are applied little by little onto predetermined positions by ink-jet or microcontact printing. The fabrication process of the lens is complex and time consuming.

All of the known configurations described above aim to adjust a single lens. Meanwhile, in recent years, there is an increasing demand for microlens arrays with a large number of minute lenses, which can be used in imaging and video-related products. Providing a focus adjusting function to a microlens array may provide an additional value to microlens arrays.

Given the above-described technical problems, the present disclosure provides an optical device capable of adjusting optical characteristics with a simple structure, and a fabrication method thereof.

### [TECHNICAL SOLUTIONS]

In the present disclosure, a light scatterer is produced on a surface of an optical device making use of expansion/contraction or deformation of a polymer material caused by voltage application.

In a first aspect, an optical device has a first electrode layer, a second electrode layer, and a polymer layer provided between the first electrode layer and the second electrode layer, wherein the polymer layer deforms into a light scatterer on a surface of the optical device by application of a voltage.

In a second aspect, a method of fabricating an optical device includes
providing a polymer layer on a first electrode layer,
providing a second electrode layer on the polymer layer,
applying a voltage between the first electrode layer and the second electrode layer to cause polymer layer deformation such that a portion of the polymer layer protrudes on a surface of the second electrode layer, thereby forming a light scatterer.

### [ADVANTAGEOUS EFFECT OF THE INVENTION]

With the above-described configuration and method, an optical device whose optical properties are adjustable with a simple structure and a fabrication method thereof are achieved.

### BRIEF DESCRIPTION OF THE DRAWINGS

FIG. 1A is a schematic diagram illustrating a basic structure of an optical device according to an embodiment;
FIG. 1B is a schematic diagram illustrating a basic structure of an optical device according to an embodiment;
FIG. 1C is a schematic diagram illustrating a basic structure of an optical device according to an embodiment;
FIG. 2 is a diagram illustrating a basic operation of the optical device according to an embodiment;
FIG. 3 illustrates a variation of the optical device of FIG. 1A;
FIG. 4 is a schematic diagram of a microlens array according to an embodiment;
FIG. 5A is a 3D image showing a deformation process of the microlens array of the embodiment;
FIG. 5B is a 3D image showing a deformation process of the microlens array of the embodiment;
FIG. 5C is a 3D image showing a deformation process of the microlens array of the embodiment;
FIG. 5D is a 3D image showing a deformation process of the microlens array of the embodiment;
FIG. 6A is a top plan view of an electrode structure used in the microlens array of FIG. 5A to FIG. 5D;
FIG. 6B is a cross-sectional view of the electrode structure used in the microlens array of FIG. 5A to FIG. 5D;
FIG. 7 illustrates a cross-sectional profile of the microlens array of FIG. 5A to FIG. 5D, as a function of voltage;
FIG. 8 illustrates a basic operation of the optical device incorporated in the microlens array of FIG. 5A to FIG. 5D;
FIG. 9 shows 3D images of a mesh electrode used in an optical device of a comparative structure;
FIG. 10 illustrates a cross-sectional profile of the polymer gel used in FIG. 9;
FIG. 11 is a schematic diagram for explaining deformation of the polymer gel of the comparative example;
FIG. 12 illustrates another variation of the optical device;
FIG. 13 is a schematic diagram of test equipment for evaluating the distribution of diffused light of the optical device of the embodiment;
FIG. 14 is an image showing an evaluation result of the test equipment of FIG. 13;
FIG. 15 is a schematic diagram of an imaging device using the microlens array of the embodiment;
FIG. 16 is a schematic diagram of lighting equipment using the microlens array of the embodiment;
FIG. 17 is a diagram showing protrusion displacement of a polymer layer with various ionic liquids added;
FIG. 18 illustrates physical properties, diffusion coefficients and transference number of some ionic liquids in polymer gel with the ionic liquids;
FIG. 19 illustrates the relation between the amount of ionic liquid added and the deformation of polymer gel;
FIG. 20 illustrates the images of light scatters by deformed polymer gels with different amounts of ionic liquids and without an ionic liquid; and
FIG. 21 illustrates the images of deteriorated electrodes surface by some ionic liquids.

### BEST MODE FOR IMPLEMENTING THE INVENTIONS

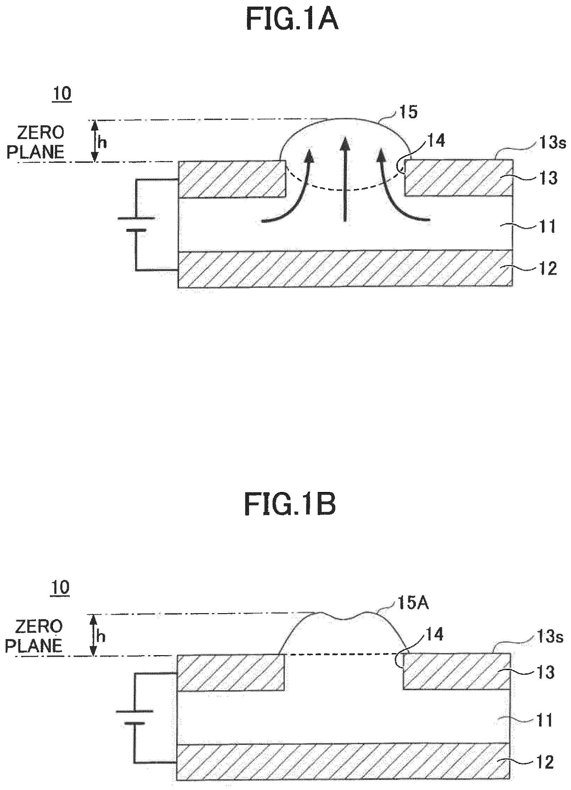

FIG. 1A to FIG. 1C illustrate a basic configuration of an optical device 10 according to an embodiment. The optical device 10 has a three-layer structure with a polymer layer 11 sandwiched between a pair of electrodes 12 and 13. The light scatterer 15 is provided on the surface 13s of at least one of the electrodes 12 and 13 (for example, of the electrode 13) under application of a voltage between them. The light scatterer 15 is made of the same material as the polymer layer 11.

The polymer layer 11 and the light scatterer 15 are made of a gel of a polymer material (which may be hereinafter referred to simply as a "polymer gel"). The light scatterer 15 is deformed due to the elasticity (expansion and contraction) and the electrostriction of the polymer gel. In the example of FIG. 1A, the light scatterer 15 has a protrusion shape. In the present specification and claims, the term "protrusion shape" means that at least a portion of the deformed polymer gel protrudes upward in the layered direction partially or entirely from the surface 13s (zero surface) of the electrode. The "protrusion shape" is not limited to the convex shape of FIG. 1A in which the polymer gel protrudes entirely.

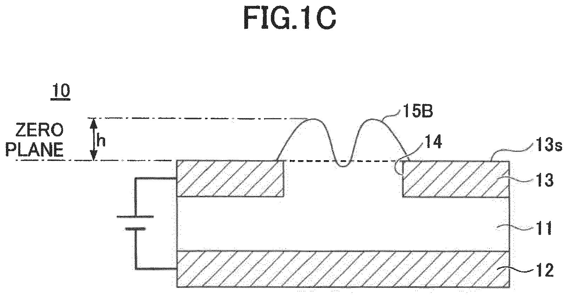

As illustrated in FIG. 1B and FIG. 1C, a protrusion with a concave around the center is also included in the "protrusion shape", because when viewed as a whole, the light scatterer 15A protrudes from an aperture 14 of the electrode 13 and exhibits the scattering effect. Not only the configuration of FIG. 1B in which the vertex of the light scatterer 15A is slightly dented or concaved, but also the configuration of FIG. 1C in which the center of the light scatterer 15B is below the surface 13s of the electrode 13 is included in the "protrusion shape".

The polymer gel may be polyvinyl chloride (PVC), polymethylmethacrylate (PMMA), polyurethane (PU), polystyrene (PST), polyvinyl acetate (PVAc), polyvinyl alcohol (PVA), polycarbonate (PC), polyethylene terephthalate (PET), polyacrylonitrile (PAN), silicone rubber (SR), or the like. Any suitable polymer (or resin) material transparent to the wavelength used may be appropriately selected.

In the embodiment, PVC, which can deform greatly under the effect of the electric field and is easy to handle, is used. A suitable plasticizer may be added to PVC, or PVC may be dissolved in a solvent. When a plasticizer is used, dibutyl adipate (DBA), diethyl adipate (DEA), dioctyl adipate (DOA), diethyl sebacate (DES), dioctyl phthalate (DOP), diethyl phthalate (DEP), tributyl acetyl citrate (TBAC), etc. may be used. For the solvent, tetrahydrofuran (THF) or the like may be used.

The mixing ratio of the plasticizer is 50 wt% or more, preferably 75 wt% or more. When the mixing ratio is less than 50 wt%, it may be difficult for the polymer layer 11 to deform even with voltage application. With the mixing ratio of 50 wt% or more and less than 75 wt%, the polymer layer 11 can deform by application of voltage; however, the much higher voltage needs to apply. By setting the mixing ratio of plasticizer to 75 wt% or more, the polymer layer 11 can deform at an appropriate voltage level.

The materials of the electrodes 12 and 13 are not limited as long as they have electrical conductivity. One or both of the electrodes 12 and 13 may be formed of a metal such as platinum, gold, silver, nickel, chromium, copper, stainless steel, titanium, tantalum, indium, palladium, lithium, niobium, or an alloy thereof. Alternatively, at least one of the electrodes 12 and 13 may be made of a transparent oxide semiconductor material such as indium tin oxide (ITO), or alternatively, a conductive polymer, conductive carbon, or the like.

The polarities of the electrodes 12 and 13 may be selected depending on which direction the polymer layer 11 is to be deformed. In the example of FIG. 1A to FIG. 1C, the electrode 12 is a cathode layer and the electrode 13 is an anode layer. The electrodes 12 and 13 may be in surface contact with the polymer layer 11.

The electrode 13 has an aperture 14. A light scatterer 15, 15A, or 15B protrudes from the aperture 14 beyond the surface 13s of the electrode 13 by application of a voltage. The diameter of the aperture 14 can be appropriately determined depending on applications of the optical device 10. For example, the diameter may be set to less than 1 mm, or preferably, the diameter may be 300 µm or less. When the diameter of the aperture 14 is 1 mm or more, it may become difficult for the polymer gel to protrude from the aperture 14 even under application of a voltage. By setting the diameter of the aperture 14 to 300 µm or less, the efficiency of the deformation process of the polymer gel with respect to voltage level can be improved, and the protrusion may become substantially uniform with respect to the center of the aperture 14.

The shape of the aperture 14 may be determined according to the purpose, and an appropriate plane shape such as a circle, an ellipse, a polygon, or the like may be employed.

In fabricating the optical device 10, a solution of PVC containing a plasticizer is applied by casting or any other suitable process onto the electrode 12 to form the polymer layer 11. The electrode 12 with predetermined dimensions is prepared in advance. On the polymer layer 11 is provided the electrode 13 which has an aperture 14 formed in advance. A predetermined voltage is applied between the electrodes 12 and 13 to produce the light scatterer 15, 15A, or 15B on the surface of the electrode 13.

The thickness of the polymer layer 11 is determined according to the size of the aperture 14, the height "h" of the light scatterer 15 to be formed, the thickness of the electrodes 12 and 13, or other factors, and it may preferably range from 0.02 mm to 0.1 mm. When the thickness of the polymer layer 11 is 0.1 mm or less, handing may become slightly difficult. However, there may be tradeoff with respect to the aperture size of the electrode 13, and accordingly, in producing a microlens array sheet having a large number of fine lenses, the thickness of the polymer layer 11 may be 0.1 mm or less.

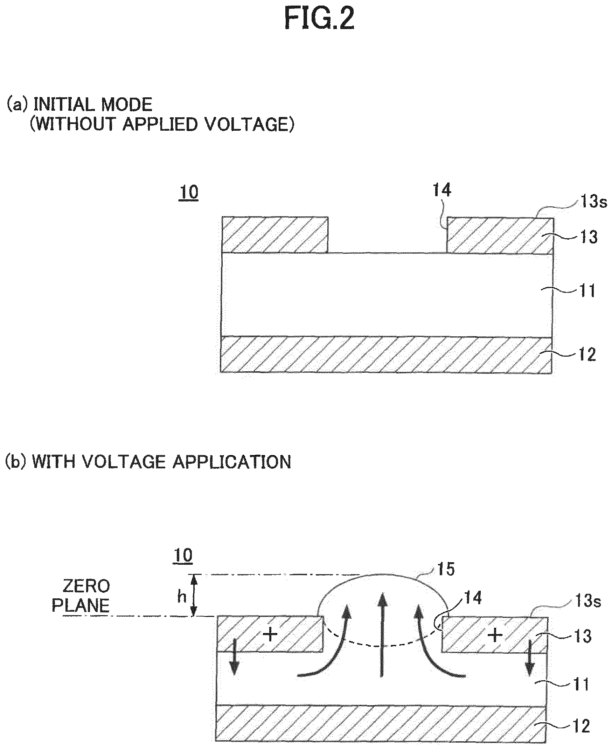

FIG. 2 illustrates a basic operation of the optical device 10 according to an embodiment, using the configuration of FIG. 1A. Diagram (a) of FIG. 2 shows the initial state in which no voltage is applied, and diagram (b) shows a state in which a voltage is applied between the electrodes 12 and 13.

Without a voltage applied, the polymer layer 11 may have a flat surface inside the aperture 14. In this state, the surface position of the polymer layer 11 is lower than the surface 13s of the electrode 13 in the height direction (or the layered direction). The surface 13s of the electrode 13 may be referred to as the zero plane.

In diagram (b), when a voltage is applied between the electrodes 12 and 13, electrons are supplied from the electrode 12, which serves as a cathode, to the polymer gel of the polymer layer 11. The polymer gel generated negative charges is attracted to the end face of the aperture 14 of the electrode 13, which serves as an anode. Due to the elasticity of the gel, the polymer gel is compressed within the minute aperture 14, pushed up from the aperture 14, and protrudes from the surface 13s of the electrode 13 to form the light scatterer 15.

The deformation of the polymer gel is based upon the elasticity and the electrostrictive characteristics of the gel, and the polymer gel rises from the aperture 14 to form a protrusion which may be point-symmetric with respect to the center of the aperture 14. If the composition of the polymer layer 11 is uniform, a protrusion with less variation should be formed as the light scatterer 15 by applying the same voltage.

Since the total volume of the polymer gel used in the optical device 10 is the same, the thickness of the polymer layer 11 may slightly decrease as the polymer gel protrudes from the aperture 14. As the thickness of the polymer 11 decreases, the height position of the electrode 13 which is in surface contact with the polymer layer 11 may also lower.

Deformation of the polymer layer 11 is reversible, and the optical device 10 can be returned to the initial mode (a) of FIG. 2 by turning off the voltage. Furthermore, as will be described later, the height "h" of the light scatterer 15 can be adjusted according to the intensity of the voltage applied.

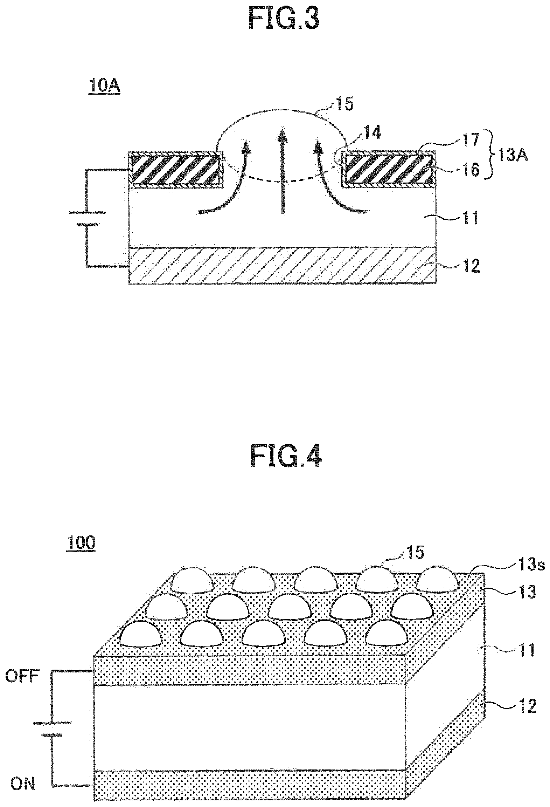

FIG. 3 is a schematic diagram of an optical device 10A which is a variation of the optical device 10. The optical device 10A has an electrode 13A serving as an anode. The electrode 13A is formed of an insulator 16 coated with a conductive film 17, in place of the electrode 13 made of a conductive material such as a metal illustrated in FIG. 1A to FIG. 1C. The insulator 16 may be an inorganic insulator such as silicon dioxide or alumina ceramic, or alternatively, an insulating resin may be used. The conductive film 17 may be a thin film made of platinum, gold, silver, nickel, chromium, copper, titanium, tantalum, indium, palladium, lithium, niobium, an alloy thereof, a conductive polymer, a conductive carbon, or an oxide semiconductor, etc. Both the insulator 16 and the conductive film 17 may be formed of a transparent material.

The light scatterer 15 is formed by a reversible deformation process of switching ON and OFF of voltage application, as has been explained with reference to FIG. 2. Since the light scatterer 15 rises from the aperture 14 by the elasticity and the electrostrictive characteristic of the polymer layer 11, a satisfactory protrusion shape may be obtained by applying a voltage.

Again in the configuration of FIG. 3, the protrusion of the light scatterer 15 may include the cross-sectional shape of the light scatterer 15A of FIG. 1B and the cross-sectional shape of the light scatterer 15B of FIG. 1C.

The configuration of FIG. 3 is advantageous because a transparent optical device can be fabricated using a transparent insulator and a transparent conductive film. Besides, use of metal materials can be reduced, and the weight of the whole optical device 10A can be reduced.

The structures of FIG. 1A to FIG. 1C and the structure of FIG. 3 can be extended to a structure that has light scatterers 15 on both sides of the optical device. For example, the electrode 12 or the cathode electrode may be used as a common electrode positioned between two electrodes 13 or the anode electrodes. Polymer layers 11 are provided on both sides of the electrode 12 and sandwiched between the two electrodes 13. Light scatterers 15 appear on the opposite surfaces of the optical device when a voltage is applied. By making the center electrode 12 of a transparent material, a double convex lens unit may be produced.

FIG. 4 is a schematic diagram of a microlens array 100 which is an application of the optical device 10 of any one of FIG. 1A to FIG. 1C. The microlens array 100 has a plurality of light scatterers 15 formed on the surface 13s of the electrode 13.

The microlens array 100 has a three-layer structure in which a polymer layer 11 is provided between a pair of electrodes 12 and 13. As has been described above with reference to FIG. 1A, the polymer layer 11 is composed of a polymer gel such as PVC, PMMA, PU, PSt, PVAc, PVA, PC, PET, PAN, SR, or the like.

A plasticizer such as DBA, DOA, DEA, DES, DOP, DEP, or TRAC may be added to the polymer gel. The mixing ratio of the plasticizer is 50 wt% or more, and more preferably, 75 wt% or more.

The electrodes 12 and 13 are made of an appropriate conductive material. The electrode 12 is, for example, a cathode layer and in this case, the electrode 13 is an anode layer. An array of light scatterers 15 is formed on the surface 13s of the anode electrode. In one example, the thickness of the polymer layer 11 is 300 µm, the diameter of the light scatterers 15 is 150 µm, the pitch between the centers of two adjacent light scatterers 15 is 200 µm, and the interval between the adjacent light scatterers 15 is 50 µm.

The microlens array 100 is produced making use of the micron-size apertures formed in the film-like electrode 13 and the elasticity of the polymer gel. Light scattereres 15 with a protrusion shapes are evenly formed on the surface 13s of the electrode 13.

As has been described above with reference to FIG. 2, depending on the voltage applied between the electrodes 12 and 13, the appearance and/or the height of the light scatterers 15 can be controlled.

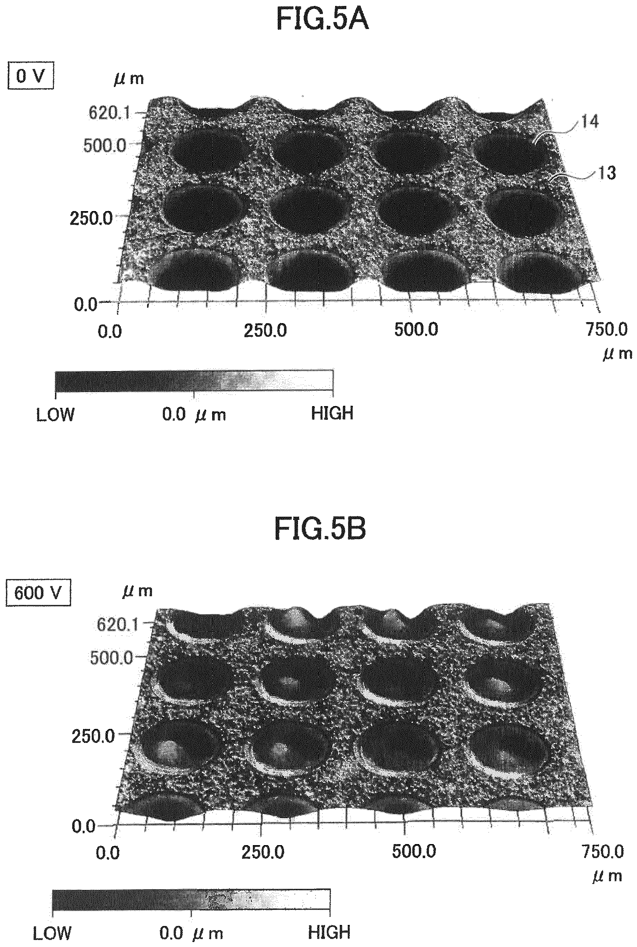

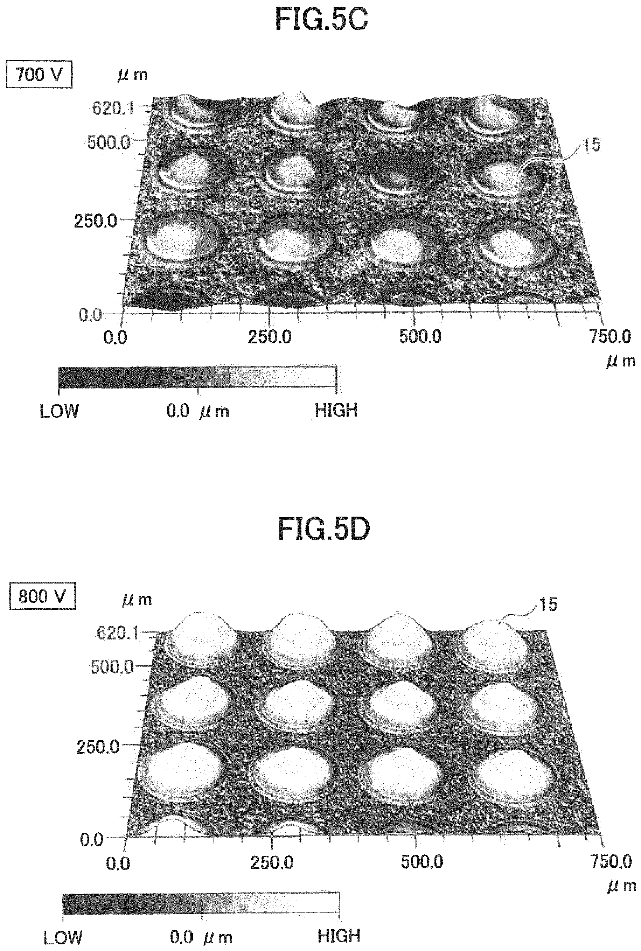

FIG. 5A to FIG. 5D are 3D images observed while the voltage level applied to the microlens array 100 of FIG. 4 is changed. Images observed at voltages of 0V, 600V, 700V, and 800V correspond to FIGs. 5A, 5B, 5C, and 5D, respectively. The position of the surface 13s of the electrode 13 is 0 µm height. The direction in which the light scatterer 15 protrudes is the positive direction, and the opposite direction downward from the surface 13s is the negative direction. The 3D observation was carried out using a digital microscope VHX1000 manufactured by Keyence Corporation.

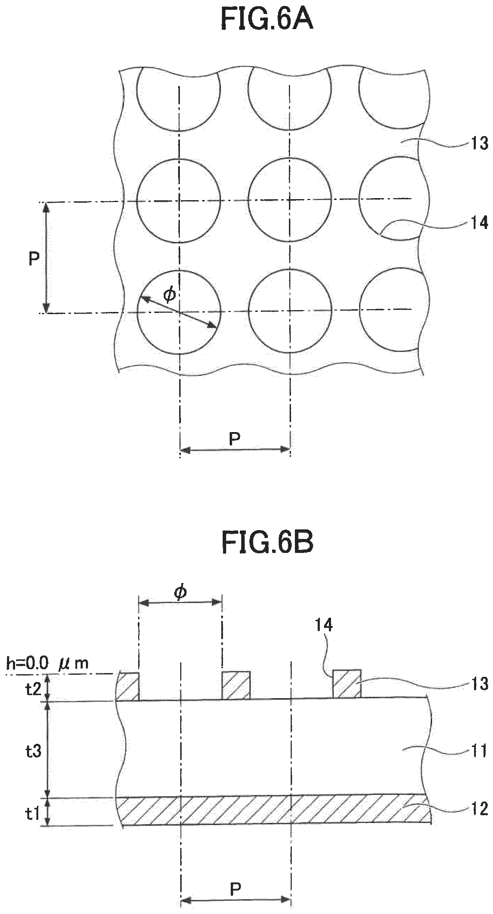

FIG. 6A and FIG. 6B are diagrams for explaining the parameters of a sample of the electrode 3 used for the 3D observation of FIG. 5A to FIG. 5D. The electrode 13 has a plurality of apertures 14. The apertures 14 have a diameter (ϕ) of 150 µm and are arranged in a 30x30 matrix within a 6x6 mm² area. The pitch "P" of the apertures 14 is 200 µm, and the gap between the adjacent apertures 14 is 50 µm.

An ITO film is used for the electrode 12 serving as a cathode, and a metal film is used for the electrode 13 serving as an anode. The thickness t1 of the electrode 12 is 30 µm, the thickness t2 of the electrode 13 is 100 nm, and the thickness t3 of the polymer layer 11 is 300 µm.

The polymer layer 11 is prepared by adding dibutyl adipate (DBA) to PVC at a mixing ratio of 80 wt%. The mixture is completely dissolved in a solvent of THF, whereby a gel solution is obtained. The gel solution is then cast onto the electrode 12 at a thickness of 300 µm. The DBA, a plasticizer, tends to carry negatively charged ions, and the polymer gel can be attracted to the aperture 14 of the anode when a voltage is applied. Over the polymer layer 11, the electrode 13 is provided.

Returning to FIG. 5A to FIG. 5D, at no applied voltage in FIG. 5A (V = 0V), the polymer layer 11 is flat inside the aperture 14. In FIG. 5B, at applied voltage of 600V, partially projecting protrusions are observed in the apertures 14. In FIG. 5C, at a applied voltage of 700V, the polymer gel more deforms into a protrusion shape in the entirety of the aperture 14 and protrudes from the surface of the electrode 13. In FIG. 5D, at applied voltage of 800V, the protrusion height further increases and a protrusion substantially symmetrical with respect to the center is obtained.

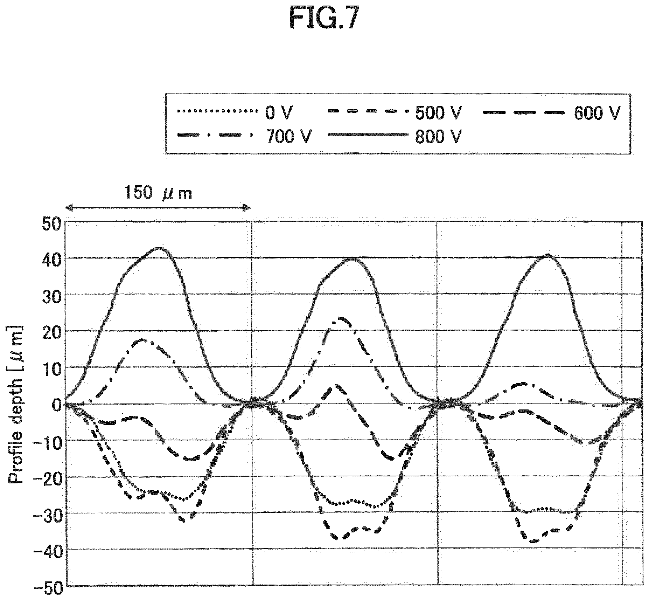

FIG. 7 is a diagram plotting the heights of three consecutive light scatterers in a line along a diagonal as a function of voltage, based upon the 3D images of FIG. 5A to FIG. 5D. The vertical axis represents height above the surface 13s of the electrode 13, and the horizontal axis represents in-plane position in the electrode 13 with a grid of 150 µm.

Without voltage application (at 0V), the height of the polymer gel inside the aperture 14 is several microns shallower than -30 µm. This is because the polymer layer 11 slightly enters the aperture 14 due to the weight of the electrode 13 itself. The profile of the polymer gel in the aperture 14 is flat.

at applied voltage of 500V, the height of the polymer gel at or near the center of the aperture 14 becomes lower than the initial position. Because the polymer gel is attracted to the inner wall of the aperture 14 by applying a voltage.

At applied voltage of 600V, the polymer gel partially protrudes from the aperture 14. The polymer gel protrudes from the center area of the aperture 14.

At applied voltage of 700V, the polymer gel prominently protrudes to deform into a protrusion shape, and the protrusion reaches a height of 40 µm at a voltage of 800V. As shown in the cross-sectional shape of the light scatterers becomes almost uniform. By adopting the configuration of FIG. 4, a substantially uniform microlens array can be deformed by applying a voltage.

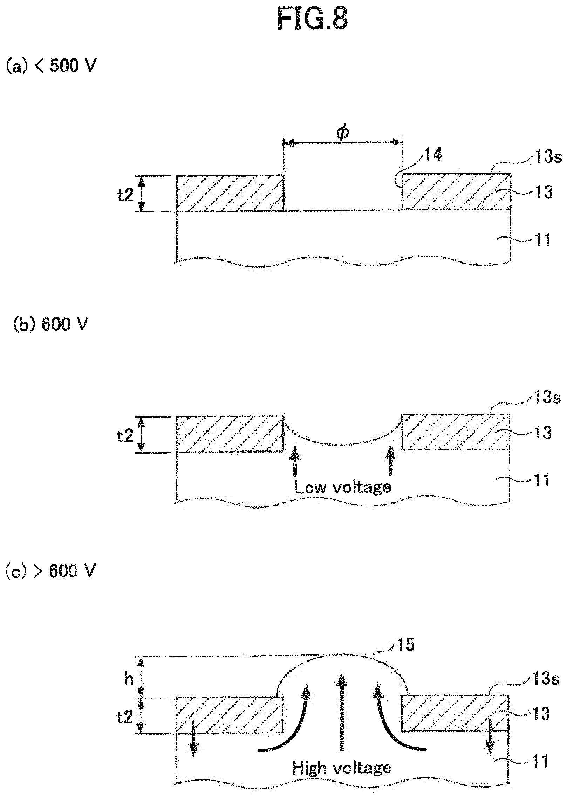

FIG. 8 illustrates how the microlens array is deformed in FIG. 5A to FIG. 5D by applying a voltage. In diagram (a) of FIG. 8, below voltage of 500 V, the polymer layer 11 stays inside the aperture 14 with the polymer surface almost flat. The height of the polymer layer 11 is lower than the surface 13s of the electrode 13. It should be noted that the voltage intensity is not constant for all polymer gel because the deformation depends on the elastic modulus of the polymer gel, the diameter ϕ of the aperture 14 in the electrode 13, as well as the applied voltage.

As in diagram (b) of FIG. 8, at the voltage of 600 V, the electrically charged polymer gel is attracted to the surface of the anode electrode 13. At the beginning of deformation of the polymer gel, the polymer gel tends to be attracted to the inner surface of the aperture 14 as the anode electrode, while in the center part of the aperture 14, the polymer gel stays lower than the surface 13s of the electrode 13. As shown in FIG. 5A, FIG. 5B, and FIG. 7, the polymer gel first rises from the wall of the aperture 14 to deform the concave profile and then protrudes near the center of the aperture 14.

In diagram (c) of FIG. 8, above the voltage of 600 V, the polymer gel rises as a whole in the aperture 14 with its elasticity. Then the polymer gel is compressed in the aperture 14, pushed up from the aperture 14, and it protrudes from the surface 13s of the electrode 13, forming a light scatterer 15.

Even at a voltage of 800 V, the current generated through the polymer gel is only 10 microamperes (µA) or less. Therefore, the device has little heat generating and can withstand long-term use.

The deformation of the polymer gel illustrated in FIG. 8 is observed at all the apertures 14. If the composition of the polymer material layer 11 is completely uniform and all the apertures 14 are ideally uniform, an array of the light scatterers 15 should deform into a uniform shape. However, actually the variations in the fabrication process of the apertures 14 and unevenness of the composition in the polymer layer 11, there may be some variations in the shape of the light scatterer 15 as shown in FIG. 7. However, a uniform microlens array 100 can be achieved as a whole, as is observed in FIG. 5B.

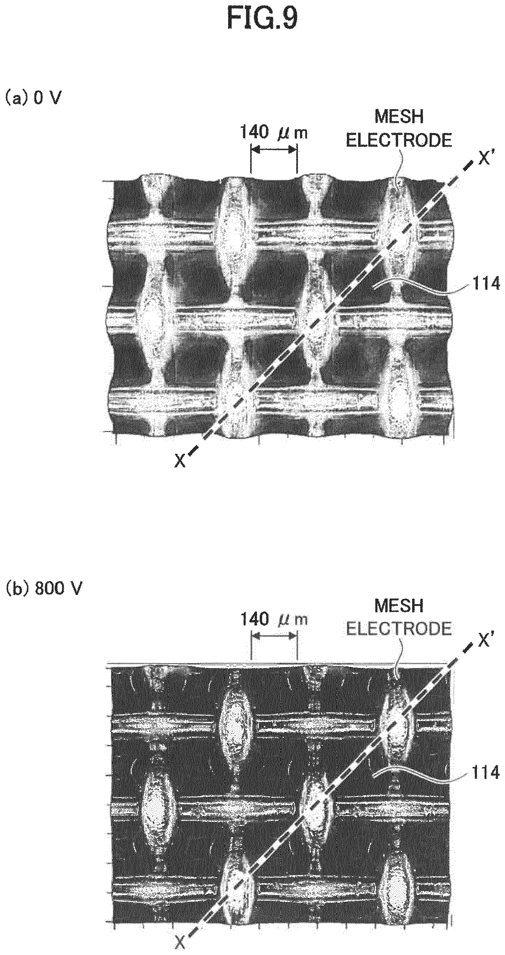

FIG. 9 shows 3D images observing deformation of the polymer gel used in a mesh electrode as a comparative structure, in place of the electrode 13 of the embodiment. The mesh electrode is composed of a metal wiring with a round cross-section. A copper wire with a diameter of 70 µm is woven into a mesh at 140 µm intervals to form a mesh electrode having mesh apertures 114 of 140 µm X 140 µm size. Over the cathode with a thickness of 100 µm, which is the same cathode used in FIG. 5A and FIG. 5B, a polymer gel with the same composition is applied to form a polymer layer 11 of a 300 µm thickness. The mesh electrode is provided onto the polymer layer 11. Image (a) of FIG. 9 shows the state with zero volts applied. Image (b) of FIG. 9 shows an observation result between the cathode and the mesh electrode at applied voltage of 800 V, as in FIG. 5D. In 3D observation, no protrusion appears in the aperture 114 of the mesh electrode even by applying the voltage of 800 V.

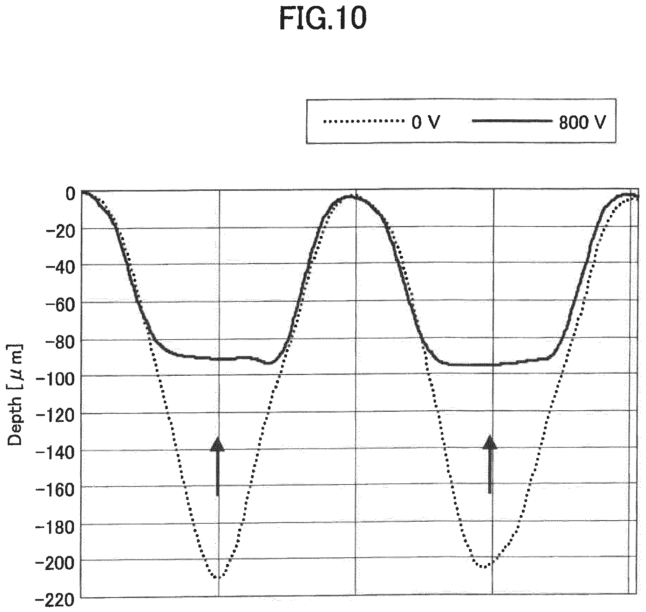

FIG. 10 plots height of the polymer layer 11 in apertures arranged along the X-X' line, based upon the 3D images of FIG. 9. The vertical axis represents the height from the surface of the mesh electrode. The highest position of the round cross-section of the copper wiring is set to 0 µm.

As is clearly seen from FIG. 10, even at the voltage of 800 V, no protrusion projecting above the surface of the mesh electrode is observed in the apertures 14. It may be considered that this is because the mesh electrode intermeshing conductive wirings is contacted at point with the polymer layer 11 in a vertical cross section, whereas the electrode 13 of the microlens array 100 of the embodiment is contacted in surface with the polymer layer 11.

In FIG. 10, the initial height position without voltage application shows -200 µm. This is because at the mesh cross point, the thickness of the mesh structure becomes double with two conductive wirings overlapping each other. The intermeshing is not always uniform. When the meshed conductive wires have a gap or strain, the depth position may slightly vary at the cross point. Considering errors of ±20 µm in the depth direction, to that depth it is difficult to introduce light for optical measurement, and the measurement result of FIG. 10 is reasonable.

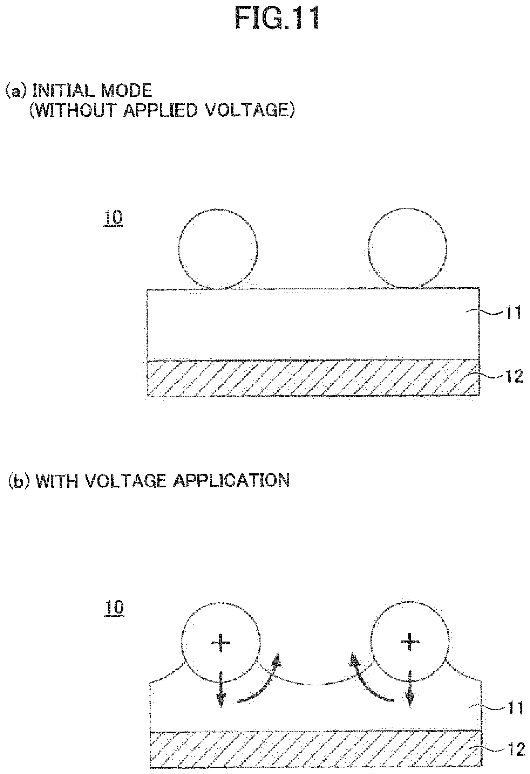

FIG. 11 is a diagram explaining the operational state of the comparative structure of FIG. 9 when a voltage is applied. At the applied voltage of 0 V in diagram (a) of FIG. 11, the surface of the polymer layer 11 is flat. The conductive wiring of the mesh electrode positioned over the polymer layer 11 is in contact with the surface of the polymer layer 11 in the tangential direction.

At applied voltage of 800 V in diagram (b) of FIG. 11, the negatively charged polymer gel deforms so as to stick around the anode wire (mesh electrode). However, such deformation to protrude in the aperture 14 does not occur. It may be considered that, since the contact between the anode wire and the polymer layer 11 is point contact, uniform voltage application enough to push up the polymer gel in the aperture 114 is not acquired.

When the applied voltage is further increased (for example, to 1000 V or more), the polymer gel may protrude in the aperture 114. However, unlike the embodiment, a microlens array of evenly shaped light scatterers 15 cannot be expected, in spite of an increase of power consumption.

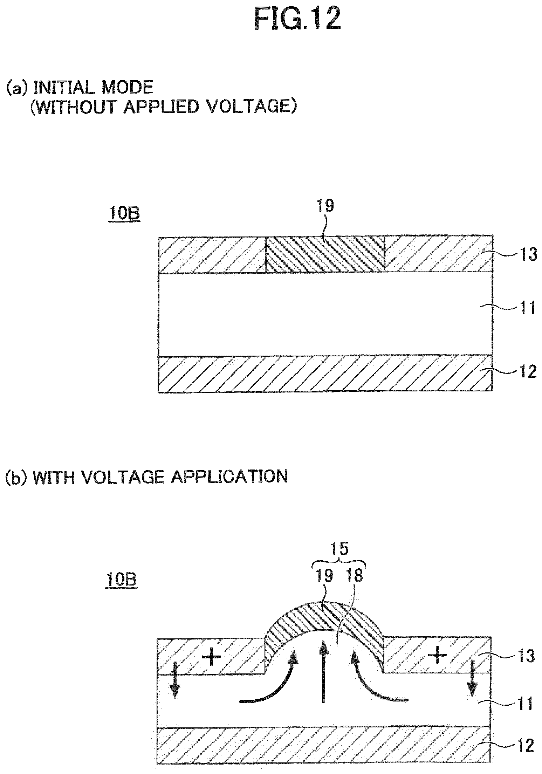

FIG. 12 illustrates a configuration of an optical device 10B according to another variation of the optical device 10. In FIG. 1A to FIG. 3, the electrode 13 has the aperture 14, and the light scatterer 15 protrudes from the aperture 14 by application of a voltage. In the configuration of FIG. 12, the electrode 13 has a non-conductive area 19 of a predetermined shape. The non-conductive area 19 is formed of an electrically neutral light-transmissive material that is deformable in accordance with the deformation of the polymer layer 11.

The non-conductive, light-transmissive, and deformable material may be the same as or different from the polymer layer 11. When the non-conductive area 19 is formed of a material different from the polymer layer 11, diffusion of light may be controlled making use of the difference in index of refraction of the material.

The two-dimensional shape of the non-conductive area 19 may be appropriately selected depending on the purpose and application of the optical device 10B, and it may be a round, an ellipse, a polygon, and so on. The non-conductive area 19 can be fabricated by, for example, forming an aperture 14 of a predetermined shape in the electrode 13 in advance, and then filling the aperture with an electrically neutral and light-transmissive material that is deformable following the deformation of the polymer layer 11.

Upon application of a voltage between the electrode 12 and the electrode 13, the optical device 10B transits from the initial state (a) of FIG. 12 to the state (b) of FIG. 12 in which the polymer layer 11 has deformed. The non-conductive area 19 also deforms following the deformation of the polymer layer 11. The deformed portion 18 of the polymer layer 11 and the non-conductive area 19 altogether form a light scatterer 15.

The thickness of the non-conductive area 19 is not necessarily the same as that of the electrode 13, and the non-conductive area 19 may be thinner than the electrode 13. The non-conductive area 19 is not necessarily in surface contact with the polymer layer 11, and an air layer may exist therebetween. In the latter case, upon contact between the polymer layer 11 and the non-conductive area 19 along with deformation of the polymer layer 11 by application of a voltage, the non-conductive area 19 starts deforming, following the deformation of the polymer layer 11, and a light scatterer 15 can be formed on the electrode 13.

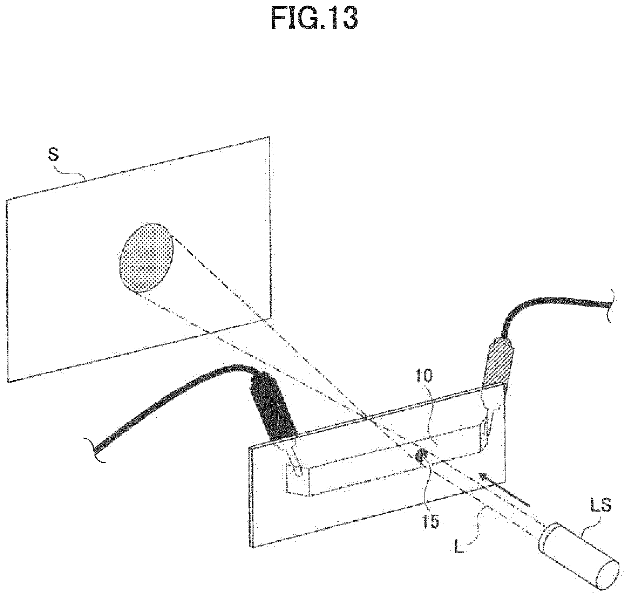

FIG. 13 is a schematic diagram of a test apparatus for evaluating the light diffusion distribution of the optical device 10 of the embodiment. The optical device 10 is composed of the PVC gel, an anode made of a metal film of a thickness of 30 µm with an aperture with a diameter of 150 µm, and a cathode made of an ITO film of a thickness of 100 µm. The PVC gel with a DBA content of 83% as a plasticizer is used for the polymer layer provided between the anode and the cathode. The thickness of the PVC gel is 300 µm. The optical device 10 with the three-layer structure is held on a polyethylene terephthalate (PET) base film, and various DC voltage are applied to produce the light scatterer 15 on the surface of the anode.

The optical device 10 is placed such that the ITO film serving as the cathode is located at the side of the laser source and that the light scatterer 15 protrudes toward the screen. The voltage applied to the electrodes is changed from 0V to 600V, 700V, and 800V. At each voltage level, red collimated light L is incident on the optical device 10 from the laser source, and focusing and diffusion through the light scatterer 15 are evaluated. As has been described above, the red laser light is incident from the transparent cathode of the optical device 10 and condensed by the light scatterer 15.

The diameter of the light scatterer 15 of the optical device 10 is 150 µm, and the height ranges from 0 µm to 40 µm. When the light scatterer 15 is formed on the surface of the anode to exhibit the focusing properties, the focus position is very close to the optical device 10, and it is difficult to observe the focal point by the naked eye. Therefore, the screen is placed on beyond the focal point so as to observe the diffusion of light after the light is focused.

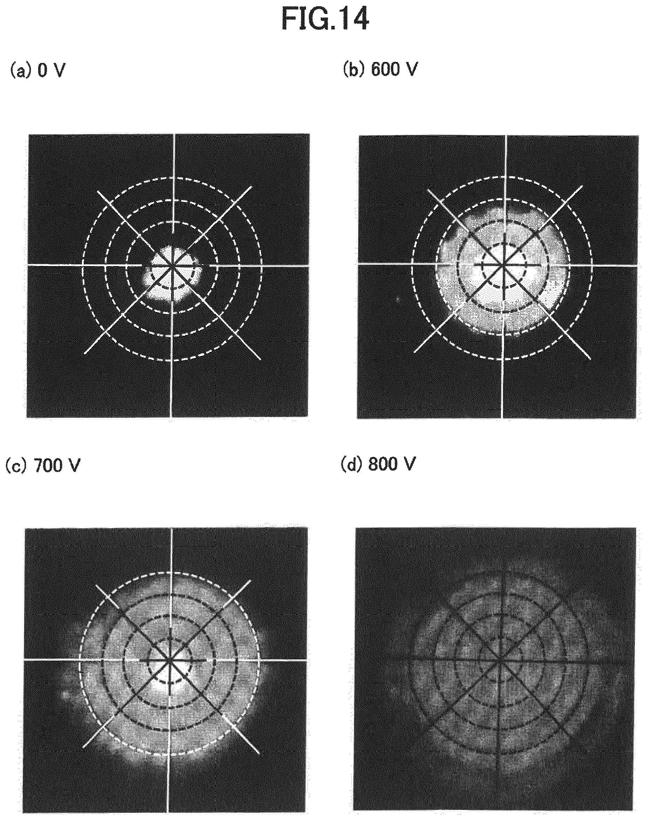

FIG. 14 shows images of the evaluation result acquired by the test apparatus of FIG. 13. The top left is a light diffusion image on the screen at the applying voltage of 0 V. The top right is a light diffusion image on the screen at the applying voltage of 600 V. The bottom left is a light diffusion image on the screen at the applying voltage of 700 V. The bottom right is a light diffusion image on the screen at the applying voltage of 800 V.

Without voltage applied (0 V), the light scatterer 15 is not formed on the anode surface of the optical device 10, the light incident on the ITO film of the cathode passes through the flat PVC gel layer, and is projected onto the screen. Light diffusion is narrow and a bright spot is observed in the center of the screen.

At the applied voltage of 600 V, the initial stage of deformation occurs in the PVC gel. Although deformation starts, the PVC gel does not reach a sufficiently protrusion shape capable of exhibiting a focusing function. The light incident from the cathode of the optical device 10 is projected onto the screen with little light condensing effect, and a light spot similar to that observed at 0 V application is obtained.

At the applied voltage of 700 V, a light scatterer 15 starts protruding on the surface of the anode. The laser light is condensed by the light scatterer 15, then diffused, and the diffused light is projected onto the screen. By application of the 700 V voltage, the radius of curvature of the light scatterer 15 is still large and the focal length is relatively long. Accordingly, the diffusion of light at the position of the screen is not so remarkable.

At the applied voltage of 800 V, a light scatterer 15 becomes higher and a protrusion appears on the surface of the anode. The radius of curvature of the light scatterer is small, while the focal length is short, and the light is diffused after having been focused near the optical device 10. On the screen, a sufficiently diffused light is observed.

From the transition of the light diffusion distributions, it is confirmed that the focal length of the light scatterer 15 is made variable by adjusting the applied voltage. The optical device 10 of the embodiment can be used as a variable focus lens or a variable shape lens.

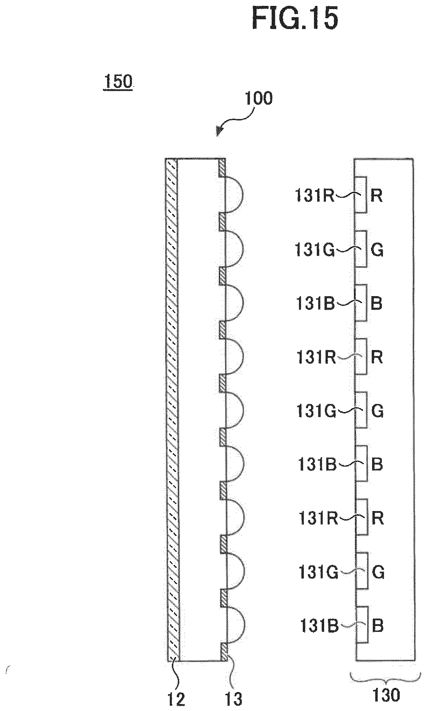

FIG. 15 is a schematic diagram of an imaging apparatus 150 using the microlens array 100 of the embodiment. The imaging apparatus 150 has a microlens array 100 with a plurality of light scatterers 15, and an image sensor array 130 with a plurality of image sensors. The respective image sensors may be charge coupled devices (CCDs), complementary metal oxide semiconductor (CMOS) sensors, or the like. Color filters 131 of three colors may be provided corresponding to the layout of the image sensors. In this example, red (R), green (G), and blue (B) color filters 131R, 131G, and 131B are alternately arranged.

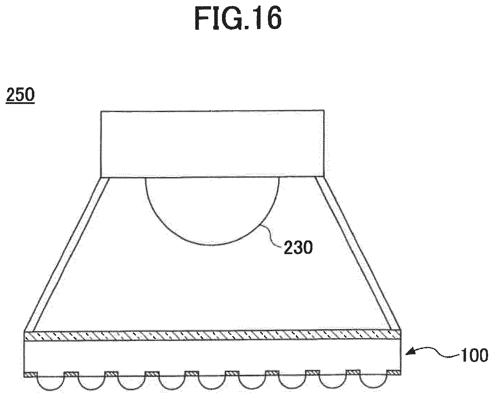

FIG. 16 is a schematic diagram of lighting equipment 250 using the microlens array 100 of the embodiment. The lighting equipment 250 has a light source 230 such as an LED lamp and the microlens array 100 provided at the light output side of the light source 230. Using the microlens array 100, light diffusion is controlled and the diffused light can be converted into collimated light while maintaining the brightness. The optical device of the embodiment or the microlens array 100 with a plurality of light scatterers 15 may be provided in the vicinity of a single light emitting element or an array of light emitting elements. Such configuration can be applied to a lighting device for microscopes, industrial equipment, and so on.

The microlens array 100 is formed into a thin film or plate with a thickness of 1 mm or less, and both the anode and the cathode can be made transparent. There are various applications of the microlens array 100, including an ultra-thin camera, a head mounted display (HMD), a microlens array (MLA) sheet, and so on. The microlens array 100 is also applicable to the medical field such as an endoscope system. An optical device 10 with a single light scatterer 15 also has various applications, including a light diffusion sheet, a lens sheet, and so on in the fields of imaging and medical treatment.

### <Structure of Polymer Material>

As has been described above, the optical device and the microlens array of the embodiment generate the light scatterer(s) having various light distributions simply by controlling ON and OFF of a voltage or adjusting the voltage level, without using a complicated mechanism. The lower the required voltage level, the more desirable for the device. To reduce the voltage level, appropriate composition of the polymer material used for the optical device and the microlens array is studied below.

Particularly, an ionic liquid that satisfies predetermined conditions is added to the polymer gel used for the polymer layer 11, thereby reducing the driving voltage of the optical device 10 or the microlens array 100. By adding the ionic liquid, the polymer gel can deform at lower power consumption.

Ionic liquid is a salt composed of cations (positively charged ions) and anions (negatively charged ions), and is in the liquid phase at 25°C. One of the predetermined conditions is that the ionic liquid has an anion (negative ion) transference number equal to or higher than a certain value at 25°C. Details of this condition are explained later.

The polymer material is polyvinyl chloride (PVC), polymethyl methacrylate(PMMA), polyurethane(PU), polystyrene(PSt), polyvinyl acetate(PVAc), polyvinyl alcohol(PVA), polycarbonate(PC), polyethylene terephthalate(PET), polyacrylonitrile(PAN), silicone rubber(SR), or the like, as has already been explained. In a preferred configuration, a polymer or resin material transparent with respect to the target wavelength is used.

The weight ratio of the ionic liquid to the above-described polymer material is greater than or equal to 0.2 wt% and less than or equal to 1.5 wt%, and more preferably, greater than or equal to 0.3 wt% and less than or equal to 1.0 wt%. Assuming that the weight of the polymer material is 1 (or 100%), by mixing the above-described weight ratio of the ionic liquid into the polymer material, the driving voltage of the optical device or the microlens array can be reduced. The reasoning for this is also described later.

A suitable plasticizer may be added to the polymer gel or such polymer gel may be dissolved in a solvent. For the plasticizer, dibutyl adipate (DBA), diethyl adipate (DEA), dioctyl adipate(DOA), diethyl sebacate (DES), dioctyl phthalate (DOP), diethyl phthalate (DEP: diethyl phthalate), tributyl acetyl citrate(TBAC), etc. can be used. As the solvent, an ether solvent such as tetrahydrofuran (THF) may be used.

The polymer material with an ionic liquid added can be used in any one of the optical devices 10 illustrated in FIG. 1A to FIG. 2, the optical device 10A of FIG. 3, the optical device 10B of FIG. 12, and the microlens array 100. As will be described in detail below, the driving voltage of the polymer layer 11 can be reduced to 200 V or less, more preferably 150 V or less, by adding an ionic liquid satisfying a predetermined condition to the polymer material.

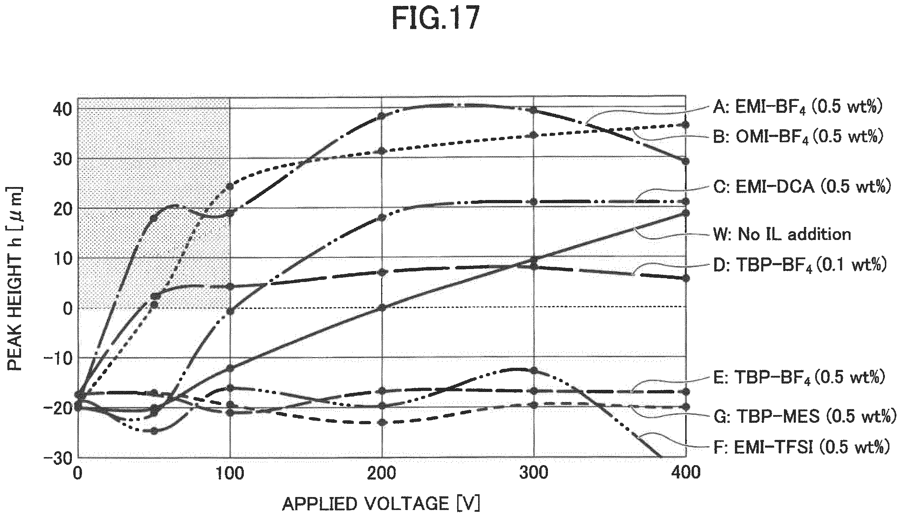

FIG. 17 shows voltage response characteristics of polymer gels with various ionic liquids added thereto. A polymer gel in which PVC having a weight-average molecular weight of 230,000 is dissolved in tetrahydrofuran (THF) solvent is prepared, and various ionic liquids are added to prepare multiple types of samples. Each sample is provided between the electrodes 12 and 13 as illustrated in FIG. 1A to FIG. 1C and FIG. 2. The applied voltage is varied to measure voltage dependent peak height "h". As a comparative configuration, a polymer gel without containing ionic liquid is prepared and voltage dependent peak height is measured in the similarly manner. In this context, the "peak height" means the height of the highest part of the polymer gel protruding over the surface 13s of the electrode 13.

The prepared polymer gels of the embodiments and the comparative configuration are applied onto the electrode 12 serving as the bottom electrode to a thickness of 300 µm. Over the polymer gel, a thin metal film of a thickness of 30 µm, in which a hole with a diameter of 100 µm is formed, is provided as the top electrode 13. The voltage applied between the electrodes 12 and 13 is changed between 0 V and 400 V, and the peak height "h" of the light scatterer 15 protruding from the electrode 13 is measured.

Line A represents voltage dependent peak height of sample A which contains 1-ethyl-3-methylimidazolium tetrafluoroborate (EMI-BF₄) as the ionic liquid. The weight ratio of EMI-BF₄ to PVC is 0.5 wt%. EMI is cation and BF₄ is anion.

Line B represents voltage dependent peak height of sample B which contains 1-octyl-3-methylimidazolium tetrafluoroborate (OMI-BF₄) as the ionic liquid. The weight ratio of OMI-BF₄ to PVC is 0.5 wt%. OMI is cation and BF₄ is anion.

Line C represents voltage dependent peak height of sample C which contains 1-ethyl-3-methylimidazolium dicyanamide (EMI-DCA) as the ionic liquid. The weight ratio of EMI-DCA to PVC is 0.5 wt%. EMI is cation and DCA (C₂N₃) is anion.

Line D represents voltage dependent peak height of sample D which contains tetrabutylphosphonium tetrafluoroborate (TBP-BF4) as the ionic liquid. The weight ratio of TBP-BF₄ to PVC is 0.1 wt%. TBP is cation and BF₄ is anion.

Line E represents voltage dependent peak height of sample E which contains tetrabutylphosphonium tetrafluoroborate (TBP-BF4) as the ionic liquid. Although the same ionic liquid as sample D used, the weight ratio of TBP-BF₄ to PVC is 0.5 wt% in sample E. TBP is cation and BF₄ is anion.

Line F represents voltage dependent peak height of sample F which contains 1-ethyl-3-methylimidazolium trifluoromethanesulfonimide (EMI-TFSI) as the ionic liquid. The weight ratio of EMI-TFSI to PVC is 0.5 wt%. EMI is cation and TFSI is anion.

Line G represents voltage dependent peak height of sample G which contains tetrabutylphosphonium methanesulfonic acid (TBP-MES) as the ionic liquid. The weight ratio of TBP-MES to PVC is 0.5 wt%. TBP is cation and MES is anion.

Line W represents voltage dependent peak height of sample W which was prepared as the comparative configuration without containing ionic liquid.

From the measurement result of FIG. 17, even if no ionic liquid is added, the polymer gel deforms by application of a voltage when a polymer material in which dielectric polarization occurs is used. With sample W of the comparative configuration which does not contain ionic liquid, the height of the light scatterer 15 increases almost linearly with respect to the applied voltage. However, in order to cause the sample W to protrude from the surface 13s of the electrode 13 up to a height of 20 µm, a voltage of 400 V is required.

In contrast, sample A with 0.5 wt% EMI-BF₄ added as the ionic liquid, and sample B with 0.5 wt% OMI-BF₄ added can cause the polymer layer 11 to protrude to such a height as 20 µm or more by applying 100 V voltage or less. Particularly, the sample A can deform to a height of 20 µm by application of only 50 V voltage, and it can deform to a height of nearly 40 µm by 200 V voltage application. Sample B also deforms to a height of 25 µm at voltage level of 100 V and to a height of 30 µm at voltage level of 200 V.

Sample C with 0.5 wt% EMI-DCA added achieves the same peak height of 20 µm by half the voltage application (about 210 V to 220 V), compared with sample W that does not contain ionic liquid. The deformation efficiency is greatly improved.

As for sample D with 0.1 wt% TBP-BF₄ added, the light scatterer 15 protrudes from the surface 13s of the electrode 13 by application of 50 V. However, even though the applied voltage is increased, the peak height remains less than 10 µm. The change in peak height is small over the range from 50V to 400V. For sample D, it may be difficult to accurately adjust the height of the light scatterer 15 by voltage.

Sample E with 0.5 wt% TBP-BF₄ added, Sample F with 0.5 wt% EMI-TFSI added, and Sample G with 0.5 wt% TBP-MES added are not enable to produce a light scatterer 15 over the surface 13s of the electrode 13 even if 400V voltage is applied.

From the measurement results of FIG. 17, it is considered that at least one of the material and the amount of ionic liquid added is/are involved in reduction of the driving voltage for the polymer layer 11.

### <Relationship between Polymer Gel Deformation and Physical Properties of Ionic Liquids>

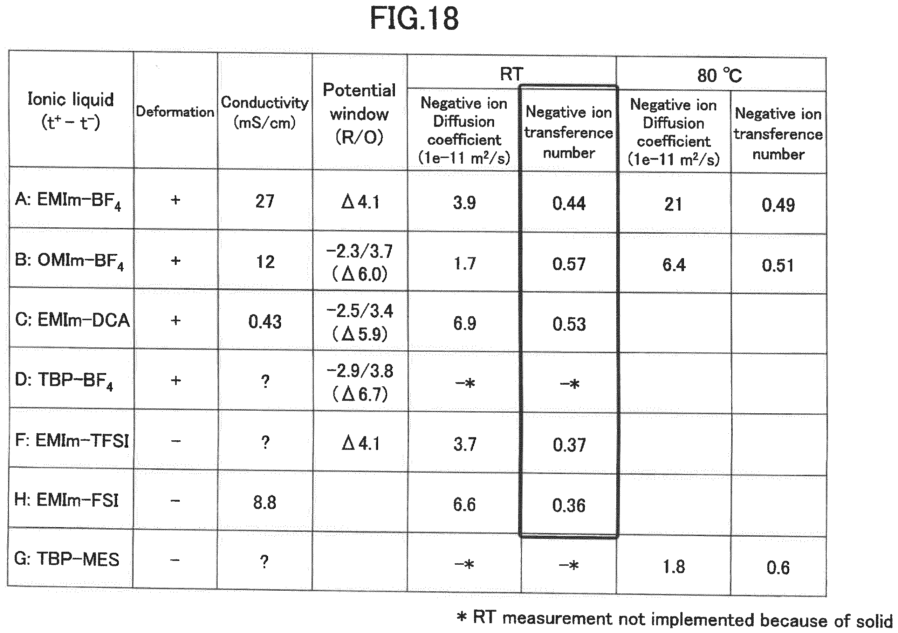

FIG. 18 illustrates the relationship between the deformation of the polymer gel and the physical properties of the ionic liquid. The physical properties of sample H with 1-ethyl-3-methylimidazolium fluorosulfonylimide (EMI-FSI) having been added as an ionic liquid is prepared and measured, in addition to samples A to G of FIG. 17.

Among samples A to H to which various ionic liquids have been added, those marked with a positive sign in the column of deformation indicate that the polymer gel protrudes from the surface 13s of the electrode 13 and forms a light scatterer 15 under application of voltage. Those marked with a negative sign indicate that the polymer gel does not protrude from the surface 13s of the electrode 13 even when a voltage is applied.

The physical properties of each ionic liquid to be measured include conductivity, size of the potential window, diffusion coefficient and transference number of negative ions at 25°C. Since some of the ionic liquids used are solid at 25°C, the diffusion coefficient and the transference number of negative ions are measured at 80°C only for those melted at 80°C by heating.

Among the above-described parameters, conductivity is considered first. The conductivity of sample C is two-digits lower than that of samples A and B, but the polymer gel to which sample C is applied deforms in the positive direction. In contrast, sample H has a conductivity much higher than sample C, but the polymer gel does not deform in the positive direction. It may be considered that the conductivity of the ionic liquid is not directly related to the deformation efficiency of polymer gels.

Potential window represents a potential region in which electrochemical stability is maintained in the system of FIG. 2. The wider the potential window (or the greater the value), the broader the electrochemically stable range of the system. Although the potential windows of sample A and sample F have the same width, the polymer gel of sample A deforms positively, while the polymer gel of sample F does not deform positively. It may also be considered that the width of the potential window of the ionic liquid is not directly related to the deformation efficiency of the polymer gel.

Next, diffusion coefficient and transference number of anion (negative ion) at 25°C are discussed. The diffusion coefficients of positive ions and negative ions contained in ionic liquid are measured by solid-state nuclear magnetic resonance (NMR) using a VNMR System manufactured by Varian Medical Systems, Inc. as the measuring instrument. The measurement procedure is to inject the ionic liquid into the capillary and set it in the equipment. The signal intensity with respect to the change in the magnetic field is measured at predetermined temperatures (25°C and 80°C in this experiment). Then, the diffusion coefficients of positive ions and negative ions are calculated from the Stokes-Einstein equation.

The transference number of negative ions represents the ratio of electric current carried by anions to the total current when a voltage is applied to the ionic liquid. The negative ion transference number is calculated as Dₐₙᵢₒₙ/(D_{cation}+Dₐₙᵢₒₙ), which is a ratio of the negative ion diffusion coefficient to the sum of the negative ion diffusion coefficient and the positive ion diffusion coefficient obtained above.

The ionic liquids used in samples A, B, C, F, and H are in the liquid phase at 25°C, and the diffusion coefficient and the transference number of negative ions of each ionic liquid are calculated from the measurement results of liquid chromatography. For samples A, B, and C with positive deformation observed, the negative ion transference numbers of the ionic liquids at 25°C are all 0.4 or more. On the other hand, the negative ion transference number at 25°C of the ionic liquids used in samples F and H, which do not exhibit positive deformation, is less than 0.4. From this, it may be considered that the deformation efficiency of the polymer gel depends on the transference number of the negative ion at room temperature.

Since ionic liquid TBP-BF₄ added to sample D with positive deformation observed does not melt at the maximum heater temperature (80°C) of the liquid chromatograph, the diffusion coefficient cannot be measured.

Ionic liquid TBP-MES added to sample G, which does not exhibit positive deformation, is also solid at 25°C, and the diffusion coefficient cannot be measured. By heating this ionic liquid to 80°C, it melts and accordingly, the diffusion coefficient and the transference number of negative ions were calculated. The obtained negative ion transference number is 0.6.

It is understood from the results of FIG. 18 that it is desirable for the ionic liquid added to the polymer layer 11 to have a negative ion transference number of 0.4 or greater at 25°C.

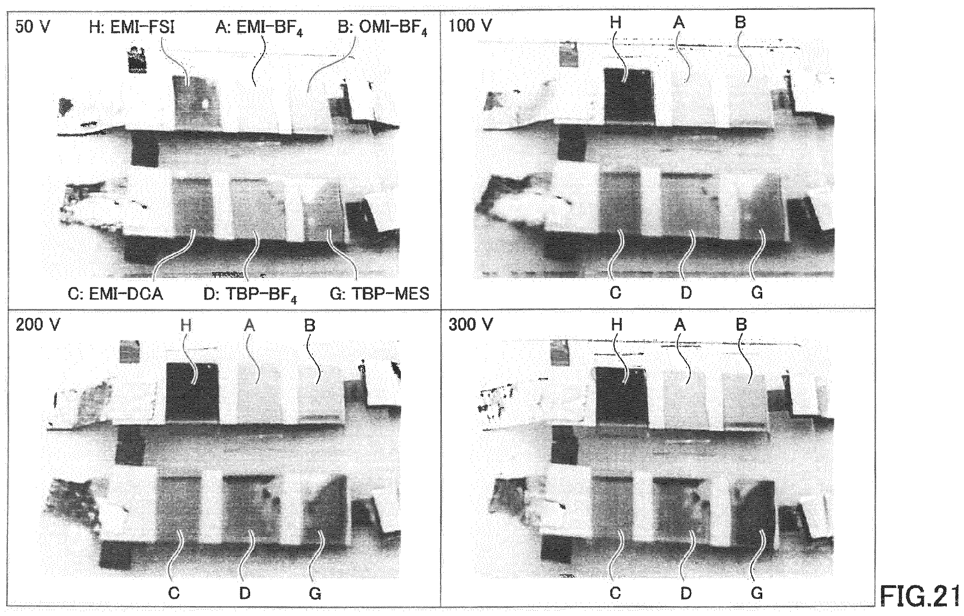

Based upon FIG. 17 and FIG. 18, it may be assumed that an ionic liquid containing anions with a smaller size (molecular weight) contributes to the deformation efficiency of the polymer gel. Meanwhile, it may be considered that the size of cations in the ionic liquid does not significantly contribute to the deformation efficiency. However, because the deformation efficiency of sample D is insufficient, the cation type could affect the deterioration of the cathode. This will be described later with reference to FIG. 21.

The ionic liquid used in sample G has a medium anion size and a medium cation size. However, since the ionic liquid is a solid at 25°C, it may be considered that this ionic liquid is not so contributable to the deformation efficiency of the gel even though the ionic liquid is dispersed by stirring in the polymer gel.

From the above, in addition to BF₄⁻ and DCA, Cl⁻ or Br⁻ having a relatively small ion-size may be used as the anion. Various ionic liquids can be used by appropriately selecting cations that do not affect the deterioration of the cathode. For example, Li-BF4 may be used as the ionic liquid.

### <Relationship between Quantity of Ionic Liquid and Deformation of polymer Gel>

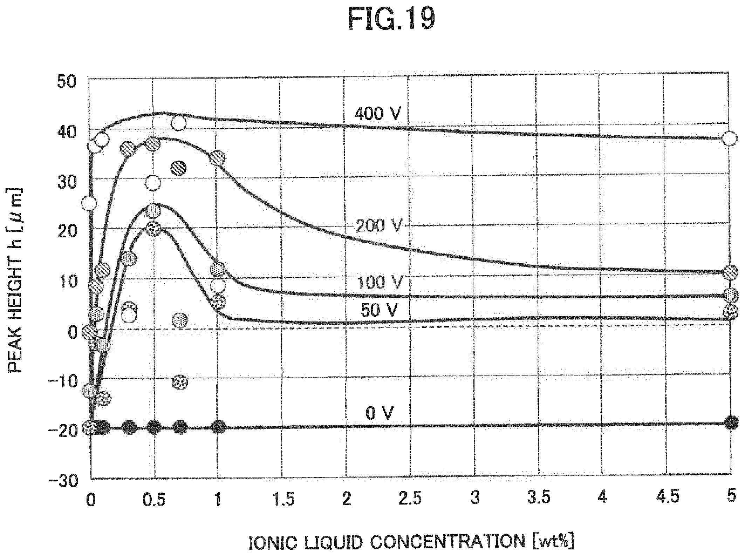

FIG. 19 illustrates the relationship between the quantity of ionic liquid added and the deformation of the polymer gel. The horizontal axis represents the concentration (wt%) of the ionic liquid in the polymer material of the gel, and the vertical axis represents the peak height of the deformation.

PVC having a molecular weight of 230,000 is used as the polymer material, and EMI-BF₄ of sample A is used as the ionic liquid. The quantity of EMI-BF₄ added is changed in the range from 0 wt% to 5.0 wt%. The applied voltage is also changed from 0 V to 50 V, 100 V, 200 V, and 400 V.

Positive deformation can be obtained in the range from 0.2 wt% to 1.5 wt% of the ionic liquid added, regardless of the level of the applied voltage. Further, the deformation becomes the maximum in the range from 0.3 wt% to 1.0 wt%. By adding the ionic liquid in this range, the light scatterer 15 can be formed on the surface of the electrode 13 at the applied voltage of 100 V or below.

It can be seen from FIG. 19 that the weight ratio of the ionic liquid to the polymer is preferably from 0.2 wt% to 1.5 wt%, and more preferably from 0.3 wt% to 1.0 wt%. This matches the result of FIG. 17.

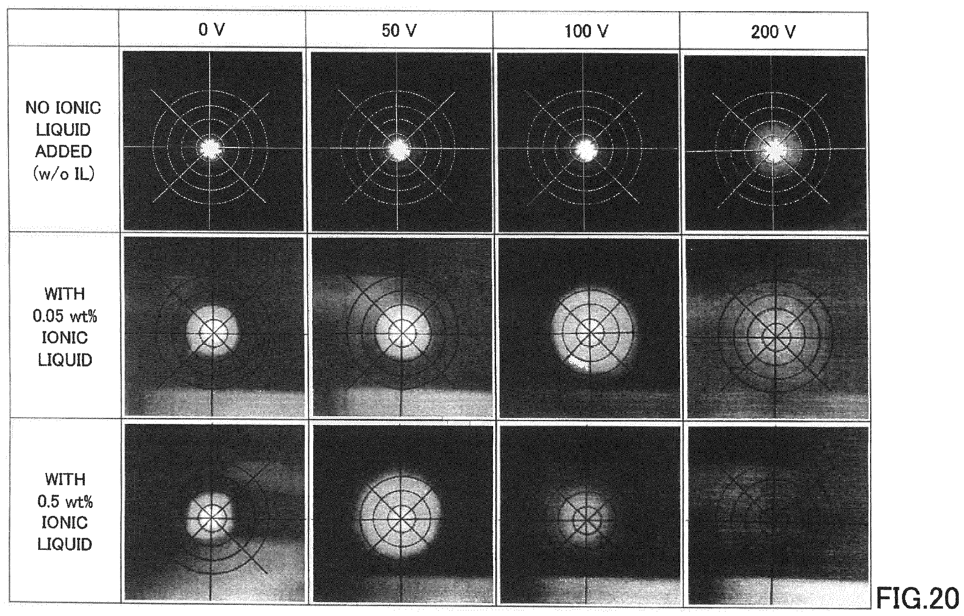

FIG. 20 is a diagram showing evaluation results of the light diffusion distributions of light scatterers 15 formed by applying different voltages to the polymer layer 11, at different quantities of an ionic liquid added. Using EMI-BF₄ as the ionic liquid, the optical device 10 of FIG. 2 is fabricated using the polymer layer 11 by changing the quantity of EMI-BF₄ added. The polymer layer 11 contains PVC as a polymer gel and dibutyl adipate (DBA) as a plasticizer. The content ratio of DBA to the total amount of PVC and DBA is 83 wt%.

The electrode 12 serving as the cathode is formed of ITO with a thickness of 150 µm, and a voltage is applied to the polymer layer 11 provided between the electrodes 12 and 13 to form a light scatterer 15. As in FIG. 13, a laser source is provided at the side of the ITO electrode 12, and a screen is provided at the side of light scatterer 15 to be produced. A laser beam of red parallel light is incident on the optical device 10 from the back face of the electrode 12, and the light diffusion state is observed on the screen.

The screen is positioned in the light emitting direction of the light scatterer 15, beyond the focal point of the light scatterer 15. The light diffusion of the light scatterer 15 is observed on the screen after the emitted light has been focused at the focal point. This is because the light-scatterer 15 of the optical device 10 is very small with a diameter of 100 µm and a height of about 0 µm to 40 µm, and because the focal position is too close to the optical device 10 to observe with the naked eye. By observing the light diffusion on a plane beyond the focal point of the light scatterer 15, the focusing state can be estimated.

With the sample to which no ionic liquid is added (denoted as "w/o IL" in the figure), the light scatterer 15 is not formed so as to protrude from the surface of the electrode 13 even at 200 V applied. The red parallel light incident on the back surface of the optical device 10 passes as the parallel light through the optical device 10 without being focused, and a light spot of the same size as the light beam cross section is formed on the screen, regardless of the level of the applied voltage.

With the sample to which 0.05 wt% EMI-BF₄ has been added, the polymer gel slightly protrudes beyond the surface of the electrode 13 when a voltage of 100 V is applied, but the light condensing function is insufficient and a spot of almost parallel light is observed at the screen position. By applying a voltage of 200 V, the light scatterer 15 with a peak height of about 10 µm (whose curvature is gentle) is formed. The light once focused at the focal point of the light scatterer 15 is then diffused and spread. No light spot appears on the screen.

With the sample to which 0.5 wt% EMI-BF₄ has been added, a light scatterer 15 is formed on the surface of the electrode 13 at voltage application of 50 V. The light first focused and then diffusing is observed at the screen position. Under the voltage application of 100 V and 200 V, a light scatterer 15 is formed on the surface of the electrode 13, whose peak height is greater than that obtained at 50 V with a sharp curvature. The light incident on the optical device from the rear side is greatly diffused after having been focused, and no light spot is observed at the screen position. These evaluation results agree with the measurement results of FIG. 19.

From the light diffusion distribution of FIG. 20, it is confirmed that the focal length of the light scatterer 15 can be varied by adjusting the applied voltage. The optical device 10 of the embodiment can be used as a variable focus lens or a variable shape lens.

### <Influence of Ionic Liquid (Cation) on Cathode Deterioration>

FIG. 21 shows influence of the ionic liquid on the cathode deterioration. As test samples, PVC gels to which different ionic liquids are added are applied onto a metal substrate, and an ITO electrode is provided as a counter electrode over the PVC gels.

Six types of PVC gels are prepared, sample A (containing 0.5 wt% EMI-BF₄), sample B (containing 0.5 wt% OMI-BF₄), sample C (containing 0.5 wt% EMI-DCA), sample D (containing 0.1 wt% TBP-BF₄), sample H (containing 0.5 wt% EMI-FSI), and sample G (0.5 wt% TBP-MES). Among these, samples that exhibit positive deformation in FIG. 18 are samples A to D. Sample D contains a reduced amount of ionic liquid of 0.1 wt% because deformation does not occur when the same weight ratio (0.5 wt%) of the ionic liquid as other samples is added.

Using the metal substrate as a positive electrode and ITO as a negative electrode, the surface state of the electrode is observed from the ITO side while changing the voltage level applied to the PVC gel.

In sample G which does not show the deformation effect, deterioration of ITO (cathode) was observed at a low voltage of 50V. In sample D, again deterioration of the ITO electrode due to voltage application is observed. It may be considered that the cation influences the deterioration of the ITO electrode. In contrast, in samples A to C which have sufficient deformation effect, deterioration of the ITO electrode is not observed even when the applied voltage is increased.

From the discussion of FIG. 17 to FIG. 21, by adding an ionic liquid with a negative ion transference number of 0.4 or more at 25°C, greater deformation is achieved at a lower voltage, as compared with a polymer gel with no ionic liquid added. In particular, when an ionic liquid with a small anion size is used as in sample A and sample B, the peak height can be greatly changed in the voltage range of 100 V and below, and control on the light scatterer 15 becomes easy. In accordance with the applied voltage level, the light scatterer 15 can be produced and its height can be adjusted. In these samples, there is little adverse effect on the cathode when the optical device 10 is driven.

The polymer material with an ionic liquid added can be applied to the microlens array 100 of FIG. 4. In this case, by applying a voltage of 200 V or lower between the electrodes 12 and 13, an array of light scatterers 15 are formed on the surface 13s of the electrode 13 which serves as the anode. Depending on the material of ionic liquid to be added, an array of light scatterers 15 with a height of 20 µm or higher can be produced by applying a voltage of 100 V or below.

An array of light scatterers 15 with a diameter of 100 µm can be formed at a center-to-center pitch of 150 µm using the polymer layer 11 to which an ionic liquid is added. In this configuration, the gap between two adjacent light scatterers 15 may be set to 50 µm. The micro lens array 100 is produced making use of the micron-order apertures formed in the film-like electrode 13, with protrusions as the voltage-responsive deformation of the polymer gel. On the surface 13s of the electrode 13, uniformly protruded light scatterers 15 are produced. The presence of the array of light scatterers 15 can be controlled and/or the height of the light scatterers 15 can be adjusted by controlling the voltage level applied between the electrodes 12 and 13 within the range of 200 V or lower.

The microlens array using the polymer layer 11 to which an ionic liquid is added may employ the configuration of FIG. 3, instead of using a single conductive film for the electrode. In this case, the electrode 13 of the microlens array is formed of an insulating sheet such as a resin sheet with prescribed apertures formed therein, and both surfaces of the insulating sheet and the inner walls of the apertures are coated with a conductive film. Alternatively, as illustrated in FIG. 12, light-transmissive non-conductive areas may be provided in the electrode 13, in place of the apertures, such that the light-transmissive non-conductive areas deform in accordance with the deformation of the polymer layer 11.

Although the invention has been described based upon the specific embodiments, the present invention is not limited to the above-described configurations. In the microlens array 100, the layout of the light scatterers 15 is not limited to a matrix or rectangular in-line arrangement, and a staggered pattern may be employed. The plane shape of the apertures 14 of the electrodes 13 may be hexagonal and a close-packed layout may be employed.

The optical devices 10, 10A, 10B of the embodiments and the microlens array 100 of FIG. 7 are extensible to a configuration having light scatterers 15 on both sides. The electrode 12 may be used as a common cathode electrode, and polymer layers 11 may be provided on both sides of the electrode 12, which are then sandwiched between two electrodes 13 serving as the anode electrodes. Upon voltage application, light scatterers 15 can be produced on both sides of the optical device or the microlens array sheet. By designing the common electrode 12 in the middle of the stack as a transparent electrode, double-convex lens(es) can be formed.

The optical device and the microlens array of the embodiments form light scatterers having various light distributions, without using a complicated mechanism. Especially when a ionic liquid is added to the polymer layer, light scatterers can be formed efficiently at a reduced driving voltage.

This application is based upon and claims the priorities of the earlier Japanese Patent application No. 2017-254351 filed December 28, 2017 and Japanese Patent Application No. 2018-243598 filed December 26, 2018, and the entire contents of which are herein incorporated.

### LIST OF SYMBOLS

- 10, 10A, 10B: optical device
- 11: polymer layer
- 12: electrode (first electrode layer)
- 13, 13A: electrode (second electrode layer)
- 14: aperture
- 15: light scatterer
- 16: insulator
- 17: conductive film
- 18: deformed portion
- 19: non-conductive area
- 100: microlens array
- 130: image sensor array
- 131R, 131G, 131B: color filter
- 150: imaging apparatus
- 250: lighting equipment

## Claims

1. An optical device comprising:
a first electrode layer;
a second electrode layer; and
a polymer layer provided between the first electrode layer and the second electrode layer, wherein the polymer layer deforms into a light scatterer on a surface of the optical device by application of a voltage.

2. The optical device as claimed in claim 1,
wherein the second electrode layer has an aperture, and
wherein the light scatterer protrudes from the aperture over a surface of the second electrode by application of the voltage.

3. The optical device as claimed in claim 1,
wherein the second electrode layer includes a non-conductive area with a predetermined shape,
wherein the non-conductive area is formed of an electrically neutral, light transmissive material and is capable of deforming in accordance with deformation of the polymer layer, and
wherein the polymer layer and the non-conductive area protrude on a surface of the second electrode layer to form the light scatterer by application of the voltage.

4. The optical device as claimed in any one of claims 1 to 3,
wherein the second electrode layer is in surface contact with the polymer layer.

5. The optical device as claimed in any one of claims 1 to 4,
wherein the light scatterer has a protrusion shape.

6. The optical device as claimed in any one of claims 1 to 5,
wherein the second electrode layer is an anode layer, and the first electrode layer is a cathode layer.

7. The optical device as claimed in claim 1 or 2, wherein the second electrode layer is made of a metal material.

8. The optical device as claimed in claim 1 or 2, wherein the second electrode layer is formed of an insulator coated with a conductive film.

9. The optical device as claimed in any one of claims 1 to 8,
wherein at least one of the first electrode layer and the second electrode layer is a transparent electrode layer.

10. The optical device as claimed in any one of claims 1 to 9,
wherein the polymer layer is a gelatinous material to which an ionic liquid is added, the ionic liquid having a negative ion transference number greater than or equal to 0.4 at 25°C.

11. The optical device as claimed in claim 10,
wherein a weight percent of the ionic liquid with respect to the polymer material is greater than or equal to 0.2 wt% and less than or equal to 1.5 wt%.

12. A microlens array comprising:
a first electrode layer;
a second electrode layer;
a polymer layer provided between the first electrode layer and the second electrode layer; and
an array of light scatterers on a surface of the second electrode layer produced by application of a voltage.

13. The microlens array as claimed in claim 12, wherein the polymer layer is a gelatinous material to which an ionic liquid is added, the ionic liquid having a negative ion transference number greater than or equal to 0.4 at 25°C.

14. An imaging apparatus comprising:
the microlens array as claimed in claim 12 or 13; and
an image sensor array provided facing the microlens array.

15. A lighting equipment comprising:
the microlens array as claimed in claim 12 or 13; and
a light source.

16. A method of fabricating an optical device, comprising:
providing a polymer layer on a first electrode layer;
providing a second electrode layer on the polymer layer; and
applying a voltage between the first electrode layer and the second electrode layer to cause polymer layer deformation such that a portion of the polymer layer protrudes on a surface of the second electrode layer, thereby forming a light scatterer.

17. The method as claimed in claim 16, further comprising:
forming a prescribed aperture in the second electrode layer in advance,
wherein the portion of the polymer layer protrudes from the aperture by application of the voltage.

18. The method as claimed in claim 16, further comprising:
forming a non-conductive area with a predetermined shape in the second electrode layer, the non-conductive area being formed of an electrically neutral, light-transmissive material that is capable of deforming in accordance with deformation of the polymer layer,
wherein the polymer layer and the non-conductive layer deform into the light scatterer on the surface of the second electrode by application of the voltage.

19. The method as claimed in any one of claims 16 to 18,
wherein the polymer layer is a gelatinous material to which an ionic liquid is added, the ionic liquid having a negative ion transference number greater than or equal to 0.4 at 25°C.
